# EUROPÄISCHE PATENTSCHRIFT

(11) **EP 2 048 596 B1**
(45) Veröffentlichungstag und Bekanntmachung des Hinweises auf die Patenterteilung: **24.11.2010**
(21) Anmeldenummer: 08105234.2
(22) Anmeldetag: 04.09.2008
(51) Int. Cl.: G06K 7/10

(54) **Vorrichtung und Verfahren zum Aufnehmen von Bildern von auf einer Fördereinrichtung bewegten Objekten**
Device and method for recording images of objects moved on a supply device
Dispositif et procédé de réception d'images d'objets mobiles déplacés sur un convoyeur

(30) Priorität: 10.10.2007 DE 102007048679
(43) Veröffentlichungstag der Anmeldung: 15.04.2009
(73) Patentinhaber: SICK AG, 79183 Waldkirch (DE)
(72) Erfinder: Reichenbach, Jürgen, 79312 Emmendingen (DE); Heizmann, Reinhard, 79286 Glottertal (DE); Schöpflin, Uwe, 79297 Winden (DE); Nopper, Richard, 79261 Gutach (DE); Gehring, Roland, 79215 Elzach (DE)
(74) Vertreter: Hehl, Ulrich

(56) Entgegenhaltungen:
- EP-A- 0 204 516
- EP-A- 0 833 270
- EP-A- 1 777 487

## Beschreibung

Die Erfindung betrifft eine Vorrichtung zum Aufnehmen von Bildern von auf einer Fördereinrichtung bewegten Objekten nach dem Oberbegriff von Anspruch 1 und ein entsprechendes Verfahren nach dem Oberbegriff von Anspruch 13.

Für die Automatisierung von logistischen Anwendungen, beispielsweise das automatische Sortieren von Objekten, werden Objekte mit einem Code versehen, die von einem Codeleser ausgelesen werden. Eine häufige praktische Anwendung sind Barcodes mit entsprechenden Barcodescannern. Zur Identifizierung werden aber auch andere Kodierungen verwendet, etwa zweidimensionale Codes wie ein Maxicode oder ein Aztec-Code, oder Beschriftungen, die mit einer Texterkennung (OCR) dekodiert werden. Um solche Codes zu lesen, werden Bilder der Objekte mit den Codes aufgenommen.

In einer automatisiert arbeitenden Lesevorrichtung, etwa bei einer Gepäckabfertigung in Flughäfen oder der automatisierten Sortierung von Paketen in Logistikzentren, werden die Objekte an dem Codeleser vorbei gefördert und Bilddaten der Objekte mit den darauf angeordneten Codes durch zeilenweise Abtastung gewonnen.

Die Fördereinrichtung, auf der die Objekte bewegt werden, bewegt sich nicht immer mit einer gleichmäßigen Geschwindigkeit. Dies ist besonders der Fall bei Schalensortern, wo jeweils eine Schale der Fördereinrichtung nur ein Objekt aufnimmt. Bei der Beladung eines solchen Schalensorters werden Objekte mittels so genannter Einschussbänder auf die Schalen transportiert. Wenn aktuell keine Schale frei ist, muss das Einschussband verzögert oder angehalten werden. Ein über dem Einschussband montierter Codeleser, der Objekte zeilenweise abtastet, liefert dann nur verzerrte Bilder, weil die relative Bewegung des Objekts zum Codeleser unregelmäßig ist. Dieses Problem tritt nicht nur an Einschussbändern auf, sondern bei jeglicher Geschwindigkeitsänderung des Förderers, auf dem sich die Objekte befinden. Verzerrungen in den aufgenommenen Bilddaten erschweren aber die Dekodierung, besonders wenn herkömmliche Texterkennungsprogramme die Bilder auswerten sollen, um eine Beschriftung wie eine Adresse zu dekodieren.

Aus der EP 0 833 270 A2 ist eine Zeilenkamera zur Erfassung von Informationen auf Objekten bekannt, die auf einem Transportband gefördert werden. Dabei ist die Bildwiederholfrequenz der Zeilenkamera und die Transportgeschwindigkeit der Vorschubeinrichtung aufeinander abgestimmt steuerbar.

Die EP 0 204 516 A2 offenbart einen Roboter mit einer Zeilenkamera zur Erkennung von Objekten. Der Vorschub der Objekte wird mit einem Encoder gemessen und jeweils eine Bildzeile aufgenommen, wenn ein bestimmter Vorschub erreicht ist.

Es ist daher Aufgabe der Erfindung, einen Barcodescanner mit zeilenweiser Gewinnung von Bilddaten dahingehend weiterzubilden, dass er verzerrungsfreie oder weniger verzerrte Bilder liefert.

Diese Aufgabe wird durch eine Vorrichtung und ein Verfahren zum Aufnehmen von Bildern nach Anspruch 1 beziehungsweise 13 gelöst. Indem die Aufnahmefrequenz des Zeilensensors an die Bewegungsgeschwindigkeit angepasst wird, kann die Auflösung der Bilddaten unabhängig von dem Bewegungsprofil bleiben. Nachgelagerte Bildauswertungen einschließlich der Dekodierung oder Texterkennungen können mit Bilddaten arbeiten, die von Störungen, Verzerrungen und sonstigen Artefakten durch eine unterschiedliche Fördergeschwindigkeit befreit sind. Dadurch wird die Auswertung vereinfacht, und vor allem werden Fehllesungen vermieden und damit die Leserate erhöht, so dass eine aufwändige und kostentreibende manuelle Nachbearbeitung der automatisierten Sortierung seltener erforderlich wird.

Die Erfindung geht dabei von dem Prinzip aus, Störungen in dem gleichmäßigen Bewegungsablauf der Fördereinrichtung zu erkennen und darauf zu reagieren. Die Dichte der aufgenommenen Bildzeilen hängt dann nicht mehr von der Geschwindigkeit des Förderers ab, sondern letztlich von der geförderten Strecke der Objekte, was für ein verzerrungsfreies und gleichmäßig aufgelöstes Bild das richtige Maß darstellt. Deshalb kann die Geschwindigkeitsbestimmungseinrichtung auch so verstanden werden, dass sie ohne unmittelbaren Zeitbezug die zurückgelegte Strecke angibt. Da dennoch über die Aufnahmefrequenz ein Zeitbezug hergestellt ist, wird letztlich auch in diesem Fall ein Geschwindigkeitsmaß zugrunde gelegt.

Die Auswertungseinheit ist bevorzugt dafür ausgebildet, die Aufnahmefrequenz adaptiv derart anzupassen, dass der Zeilensensor Bilddaten äquidistanter Zeilen des Objekts aufnimmt. Hier ist der Bezug das Objekt über dessen Fördergeschwindigkeit, die Bildzeilen sind in dieser Weise also äquidistant und somit gleichmäßig über das Objekt verteilt, und dies bedeutet eine gleichmäßige Bildauflösung in Richtung quer zu den Zeilen, welches einem Bild entspricht, das in einer fiktiven Situation mit gleichmäßiger Fördergeschwindigkeit und konstanter Aufnahmefrequenz aufgenommen worden ist. Die Auswertung wird damit unabhängig von Störungen aufgrund von Schwankungen in der Fördergeschwindigkeit.

In einer bevorzugten Ausführungsform ist der Zeilensensor dafür ausgebildet, auf eine Grundaufnahmefrequenz mit zugehörigen Aufnahmeparametern eingestellt zu werden, die insbesondere einer maximalen Fördergeschwindigkeit der Fördereinrichtung entspricht, und die Auswertungseinheit ist dafür ausgebildet, die Anpassung der Aufnahmefrequenz und/oder der Aufnahmeparameter an eine gegenüber der maximalen Fördergeschwindigkeit veränderte Bewegungsgeschwindigkeit dem Zeilensensor differentiell vorzugeben. Derartige Aufnahmeparameter können die Helligkeit, Verstärkungsfaktoren, Belichtungszeiten oder dergleichen sein. Das System ist also auf eine Grundeinstellung eingerichtet, die dem gewöhnlichen Zustand des störungsfrei laufenden Förderers entspricht. In diesen Grundzustand muss erfindungsgemäß nicht eingegriffen werden. Erst wenn eine von dem Grundzustand abweichende Fördergeschwindigkeit detektiert wird, wird eine Anpassung der Frequenz vorgenommen und gegebenenfalls auch ein oder jeder von der Frequenz abhängiger Aufnahmeparameter modifiziert, etwa die Belichtungszeit verkürzt, um einer höheren Aufnahmefrequenz gerecht zu werden, und entsprechend die Verstärkung erhöht.

In einer vorteilhaften Ausführungsform ist die Geschwindigkeitsbestimmungseinrichtung ein Weggeber, ein Inkrementalgeber oder ein anderer dem Zeilensensor vorgelagerter Sensor. Ein derartiger Sensor ist oft ohnehin in den Förderer integriert, um die Geschwindigkeit aus von der Codelesung unabhängigen Gründen zu kennen. Kennt der Zeilensensor die Geschwindigkeit rechtzeitig, so kann die Anpassung der Aufnahmefrequenz im voraus geplant und dann ausgeführt werden. Ein Weggeber gibt an, wie groß die Förderstrecke des Objekts seit der letzten Aufnahme ist. Diese Information kann ausgenutzt werden, um festzulegen, wann die nächste Zeile aufzunehmen ist, und ist damit ein Maß für die passende Aufnahmefrequenz.

Alternativ ist die Geschwindigkeitsbestimmungseinrichtung eine Förderersteuerung der Fördereinrichtung, welche insbesondere das Geschwindigkeitsprofil der Fördereinrichtung vorgibt, und die Förderersteuerung kann Daten über das Geschwindigkeitsprofil an die Auswertungseinheit übermitteln, die insbesondere eine gegenwärtige Geschwindigkeit, eine Dauer einer folgenden Beschleunigungsphase, einen Beginn der Beschleunigungsphase und/oder eine Endgeschwindigkeit nach Abschluss der Beschleunigungsphase enthalten. Hier und im Folgenden ist Beschleunigung im physikalischen Sinne zu verstehen, schließt also eine Verzögerung beziehungsweise ein Abbremsen bei negativer Beschleunigung ein. Weiterhin ist eine Beschleunigungsphase bei konstanter Beschleunigung mit Ausgangsgeschwindigkeit, Endgeschwindigkeit, Beginn und Dauer der Beschleunigungsphase überbestimmt, es genügt also die Übergabe nur eines Teils dieser Parameter. Werden Daten über eine Phase nicht gleichmäßiger Bewegung des Förderers unmittelbar von der Förderersteuerung übergeben, so kann zum einen eine eigentliche Messung der Geschwindigkeit entfallen, zum anderen liegen Daten über die Geschwindigkeitsänderung schon weit im Voraus vor.

Besonders bei Schalensortern ist es üblich, ein Abbremsen und Beschleunigen nicht in beliebiger Weise, sondern mit jeweils einer ganz genau bestimmten Beschleunigungsphase vorzunehmen. Dieses Vorgehen ist bei jedem Förderer denkbar. Ein Beispiel von praktischer Relevanz für eine solche vordefinierte Beschleunigungsphase ist, wenn die Förderersteuerung vorteilhafterweise für die Einstellung einer maximalen Fördergeschwindigkeit von 2 m/s, einer verzögerten Fördergeschwindigkeit von 0,5 m/s sowie eine Beschleunigungsphase von 500 ms bei einer Beschleunigung von 3 m/s² von maximaler Fördergeschwindigkeit zu verzögerter Geschwindigkeit und umgekehrt ausgebildet ist. Dieser Parametersatz wird gerade bei gängigen Schalensortern und deren Einschussbändern verwendet.

Die Fördereinrichtung ist bevorzugt ein Schalenförderer oder dessen Einschussband. Bei einem Schalenförderer kann leicht das Problem einer bereits belegten Schale und einer deshalb erforderlichen Geschwindigkeitsanpassung entstehen. Deshalb ist die Erfindung für Schalenförderer besonders geeignet, weil sie Verzerrungen der Bilddaten durch die hier regelmäßig auftretenden Beschleunigungsphasen ausgleichen kann.

In einer besonders vorteilhaften Weiterbildung ist in der Auswertungseinheit die sich zeitlich ändernde Aufnahmefrequenz für ein vorgegebenes Geschwindigkeitsprofil eines Objekts als zeitliche Intervalle zwischen je zwei Aufnahmen in einer Tabelle abgelegt, wobei die Einträge in der Tabelle insbesondere eine Hyperbel beschreiben. Die Vorrichtung kann auf diese Weise im Vorhinein auf bestimmte Geschwindigkeitsänderungen des Förderers vorbereitet werden. Dafür kann die Tabelle in einer Vorabphase, aber auch Online, bei Inbetriebnahme oder in einer Wartungspause berechnet, eingegeben oder über eine Schnittstelle oder einen Netzanschluss eingelesen werden. Die Hyperbel als in der Tabelle abgelegte Wertetabelle ist deshalb besonders vorteilhaft, weil sie wegen der umgekehrt proportionalem Beziehung zwischen Aufnahmefrequenz und Periode, also der Zeit zwischen zwei Aufnahmen, und der proportionalen Beziehung zwischen Aufnahmefrequenz und Fördergeschwindigkeit für die Aufnahme eines gleichmäßig aufgelösten Bildes gerade die geeignete Funktion für die Behandlung einer Phase mit gleichmäßiger Beschleunigung ist.

Noch bevorzugter ist die Auswertungseinheit dafür ausgebildet, dass Einträge der Tabelle vorgegeben, insbesondere durch Eingeben, Einlesen, oder anhand eines vorgegebenen Geschwindigkeitsprofils berechnet werden, insbesondere als Hyperbeln aus einer maximalen Fördergeschwindigkeit, einer verzögerten Fördergeschwindigkeit sowie einer gleichmäßigen Beschleunigungsphase dazwischen, durch Anfangszeit, Endzeit und/oder Beschleunigung angegeben ist. Damit kann die Erfindung aus die Beschleunigungsphase beschreibenden Daten selbständig die Tabelle generieren und damit das Einrichten erleichtern.

Bevorzugt ist die Auswertungseinheit dafür ausgebildet, einen Tabellenwert mehrfach zu verwenden, um längere Beschleunigungsphasen abzubilden, und/oder einen Aufnahmestopp des Zeilensensors zu veranlassen, wenn die Bewegungsgeschwindigkeit Null, also die Fördereinrichtung angehalten ist. Nach dem ersten Aspekt kann die Tabelle zur Einsparung von Speicherbedarf und Rechenaufwand grober aufgelöst werden, indem jeder Wert mehrfach verwendet wird. Nach dem zweiten Aspekt ist die Vorrichtung in der Lage, angemessen auf einem Bandstopp zu reagieren, bei dem weitere Aufnahmen von Bilddaten keine nützlichen Informationen liefern können. Beim Wiederanlaufen des Bandes kann ein glatter Übergang sichergestellt werden, denn dies ist nichts weiter als eine Beschleunigungsphase mit Anfangsgeschwindigkeit Null, die erfindungsgemäß wie jede andere Beschleunigungsphase aufgefangen werden kann.

In einer weiteren bevorzugten Ausführungsform ist in der Auswertungseinheit eine weitere Tabelle vorgesehen, welche zeitliche Intervalle für die Aufnahmefrequenz für den Fall enthält, dass in einer Beschleunigungsphase das Vorzeichen wechselt, also eine Beschleunigungsumkehr stattfindet, um einen glatten Übergang der zeitlichen Intervalle sicherzustellen. Ohne eine solche Zusatztabelle könnte die gegen die Zeit aufgetragene Aufnahmefrequenz einen Knick aufweisen, der sich in den Bilddaten als störende Verzerrung niederschlägt.

Vorteilhafterweise ist die Auswertungseinheit zumindest teilweise auf einem programmierbaren Logikbaustein, insbesondere einem FPGA, des Zeilensensors implementiert, wobei der Zeilensensor mindestens einen Eingang aufweist, mit dem der Logikbaustein angewiesen werden kann, die Anpassung der Aufnahmefrequenz über ein vorgegebenes Geschwindigkeitsprofil zu starten und durchzuführen. Die Erfindung ist damit im Wesentlichen abgekapselt auf einem eigenen Baustein implementiert, der durch einen einfachen Startbefehl dazu veranlasst werden kann, störende Einflüsse durch Geschwindigkeitsänderungen des Förderers auszugleichen. Dies ermöglicht eine einfache, kostengünstige und modulare Integration der erfindungsgemäßen Lösung in bestehende Lesesysteme. Dabei kann selbstverständlich statt eines zusätzlichen auch ein bereits vorhandener Logikbaustein mit der erfindungsgemäßen Funktionalität ausgestattet werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Ausführungsform der erfindungsgemäßen Vorrichtung über einem Förderband mit mehreren darauf bewegten Objekten;
- Fig. 2: eine Darstellung der zeitlichen Abhängigkeit der Aufnahmeperiode, also der inversen Aufnahmefrequenz, und der Fördergeschwindigkeit in einer Brems- und Beschleunigungsphase;
- Fig. 3: eine Darstellung gemäß Figur 2 in der besonderen Situation, dass während der Bremsphase der Förderer erneut beschleunigt wird; und
- Fig. 4: ein Ablaufschema der erfindungsgemäßen Anpassung der Aufnahmefrequenz an die Fördergeschwindigkeit am Beispiel einer Bremsphase mit konstanter Beschleunigung.

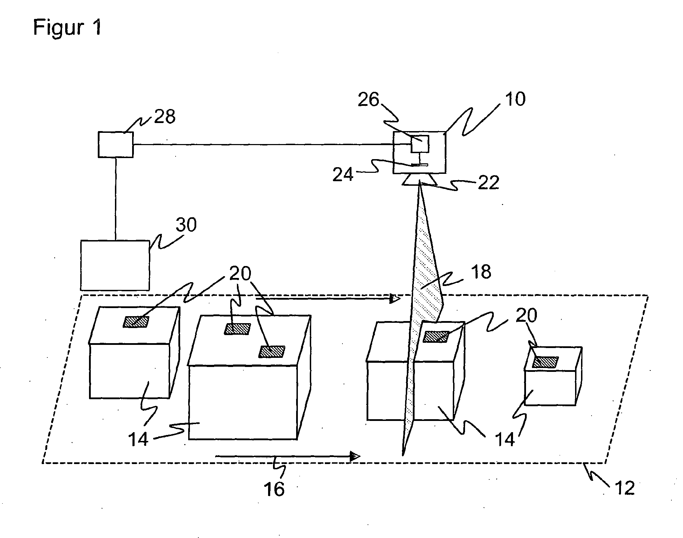

Figur 1 zeigt in einer schematischen dreidimensionalen Darstellung die Anordnung einer Ausführungsform eines erfindungsgemäßen Zeilensensors 10 über einem Förderband 12, auf dem Objekte 14 in einer durch die Pfeile 16 angedeuteten Richtung an dem Sensor 10 vorbeibewegt werden. Die Objekte 14 tragen Informationen 20, die von dem Zeilensensor 10 erfasst und ausgelesen werden.

Der Zeilensensor 10 weist ein nur andeutungsweise dargestelltes Objektiv 22 mit einer Abbildungsoptik und einen Zeilensensor 24 auf, beispielsweise eine CMOS- oder CCD-Zeile. Der Zeilensensor 24 liefert Bilddaten der Objekte 14 in einer Leseebene 18. Diese bei fortgesetzter Bewegung der Objekte 14 durch die Leseebene 18 zeilenweise erfassten Bilddaten werden von einer Kamerasteuerung 26 zu einem Gesamtbild zusammengesetzt, um Bildauswertungen zu ermöglichen. Zu den möglichen Bildauswertungen zählt die Dekodierung der Informationen 20, etwa von Barcodes, zweidimensionalen Codes oder Texterkennung durch die Steuerung 26 oder in einem nachgeordneten, in Figur 1 nicht dargestellten System. Alternativ zu einer Zeilenkamera mit einem zeilenförmigen Bildsensor 24 kann als Zeilensensor 10 auch eine andere technische Implementierung vorgesehen sein, etwa Abscannen der Zeile oder jegliche anderen bekannten optoelektronischen Verfahren.

Mit der Steuerung 26 ist ein Nachrichtenknoten 28 verbunden, etwa als Teil eines Datennetzwerkes oder als Bussystem, welcher Daten über das Förderband 12 von einer Förderersteuerung 30 empfängt und an die Steuerung 26 weitergibt. Die Förderersteuerung 30 ist unter anderem dafür verantwortlich, die Bewegung des Förderbandes 12 zu kontrollieren, also es zu beschleunigen, abzubremsen, in Gang zu setzen, zu stoppen oder auf einer bestimmten Fördergeschwindigkeit zu halten. Alternativ zu einer Verbindung der Steuerung 26 mit der Förderersteuerung 30 kann auch vorgesehen sein, die Geschwindigkeit oder die Position des Förderbandes 12 mit einem eigenen Sensor zu messen, welcher der Zeilenkamera 10 vorgeordnet oder in diese integriert ist, etwa einem Inkrementalgeber, einem Weggeber oder auch einem vorgelagerten optoelektronischen Sensor.

In einer speziellen Ausführungsform der Erfindung wird das Förderband 12 im normalen Betrieb mit einer konstanten Maximalgeschwindigkeit von 2m/s betrieben. Die Förderersteuerung 30 ist in der Lage, die Geschwindigkeit auf 0,5 m/s abzusenken und anschließend wieder auf die Maximalgeschwindigkeit zu bringen. Die Geschwindigkeitsänderung geschieht in einer Brems- oder Beschleunigungsphase von 500 ms bei einer konstanten Beschleunigung von ±3 m/s². Dies ist insbesondere erforderlich, wenn das Förderband 12 ein Einschussband für einen Schalensorter ist, welches abgebremst werden muss, wenn aktuell keine Schale frei ist. Die Erfindung ist aber auf dieses spezielle Geschwindigkeitsprofil des Förderers 12 nicht beschränkt, sondern in der Lage, bei beliebiger konstanter und nicht konstanter Geschwindigkeit unverzerrte Bilddaten zu erzeugen, indem die Aufnahmefrequenz des Zeilensensors 10 an die aktuelle Geschwindigkeit und damit verbunden an die zwischen zwei Aufnahmen des Zeilensensors 10 von dem Objekt 14 zurückgelegte Strecke anzupassen.

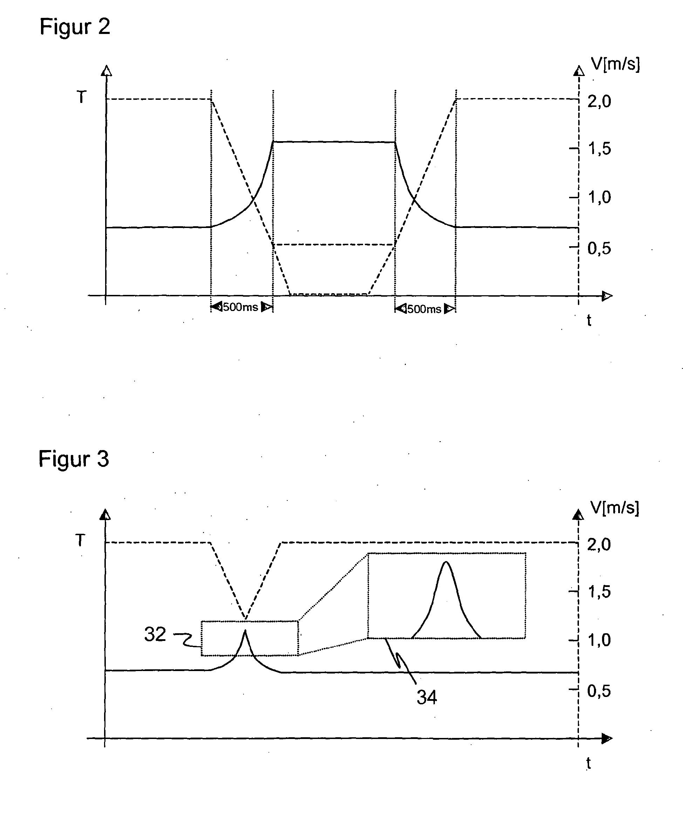

Die Anpassung der Aufnahmefrequenz soll nunmehr anhand eines Geschwindigkeitsprofils erläutert werden, wie es in Figur 2 dargestellt ist. Anstelle der Aufnahmefrequenz ist der eigentlich relevante Wert deren Kehrwert, also die Aufnahmeperiode oder diejenige Zeit, die zwischen zwei Aufnahmen des Zeilensensors 10 verstreicht. Dies kann von der Steuerung 26 unmittelbar gehandhabt werden, indem nach einer Aufnahme die jeweils erforderliche Aufnahmeperiode abgewartet wird. Daher ist in Figur 2 neben den gestrichelt dargestellten Geschwindigkeitsprofilen mit einer durchgezogenen Linie anstelle der Aufnahmefrequenz deren Kehrwert, nämlich die Aufnahmeperiode T dargestellt.

Verfolgt man das Geschwindigkeitsprofil (gestrichelte Linie) und die zugehörige Aufnahmeperiode (durchgezogene Linie) in Figur 2 über die Zeit, so bewegt sich das Förderband 12 zunächst mit einer Maximalgeschwindigkeit von 2 m/s, während der Zeilensensor 10 mit einer in beliebigen Einheiten dargestellten Grundaufnahmefrequenz die geförderten Objekte 14 zeilenweise abtastet. Zu einem durch die erste senkrechte gepunktete Linie dargestellten Zeitpunkt wird das Förderband mit einer konstanten Beschleunigung von 3 m/s² innerhalb von 500 ms auf eine verzögerte Geschwindigkeit von 0,5 m/s abgebremst. Damit auch in dieser Bremsphase Bilddaten der Objekte 14 gleichmäßig sind, also die Bildzeilen äquidistant auf den Objekten 14 verteilt sind, steigt die Aufnahmeperiode während der Bremsphase hyperbelartig an. Während sich anschließend das Förderband mit der verzögerten Geschwindigkeit von 0,5 m/s bewegt, nimmt der Zeilensensor 10 Bilddaten mit einer erhöhten konstanten Aufnahmefrequenz je Zeile auf. Zu einem späteren Zeitpunkt wird das Förderband 12 wieder auf seine ursprüngliche maximale Geschwindigkeit von 2 m/s gleichmäßig beschleunigt (dritte und vierte gestrichelte senkrechte Linie), wobei in der Beschleunigungsphase die Aufnahmeperiode ganz analog der Bremsphase hyperbelartig verkürzt wird.

Auf diese Weise wird ein nachteiliger Effekt der nicht konstanten Geschwindigkeit des Förderers 12 durch eine entsprechende Anpassung der Aufnahmeperiode oder der Aufnahmefrequenz ausgeglichen, und die Bilddaten des von der Steuerung 26 zusammengesetzten Bildes sind verzerrungsfrei, lassen also keinen Unterschied zu einer fiktiven Situation erkennen, in der das Förderband 12 ohne Beschleunigungsphasen mit gleichmäßiger Geschwindigkeit bewegt ist.

Eine Sondersituation liegt vor, wenn wie mit der strichpunktierten Linie angedeutet der Förderer über die verringerte Geschwindigkeit hinaus gänzlich zum Stillstand kommt. In dieser Situation muss die Aufnahmeperiode über eine entsprechend verlängerte Hyperbel nachgeführt und während des Bandstopps auf unendlich eingestellt werden, das heißt, es wird solange abgewartet, bis sich der Förderer 12 wieder bewegt. Das Wiederanfahren des Förderers 12 stellt eine weitere Beschleunigungsphase dar, während der die Aufnahmefrequenz wie dargestellt für ein verzerrungsfreies Bild angepasst werden kann.

Um die Anpassung der Aufnahmefrequenz technisch auf besonders einfache Weise umzusetzen, ist der Zeilensensor 10 mit seinen Aufnahmeparametern wie Helligkeit oder Belichtungszeit und auch mit der Aufnahmefrequenz auf einen Grundzustand eingestellt, welcher der Maximalgeschwindigkeit des Förderers 12 entspricht. Ändert sich die Geschwindigkeit, so wird die Aufnahmefrequenz angepasst, indem zu der Aufnahmeperiode des Grundzustands differenziell ein Anteil hinzugefügt wird, welcher der Anpassung entspricht. In entsprechender Weise werden auch die Aufnahmeparameter an die geänderte Aufnahmeperiode angepasst. Die zu Grunde gelegte maximale Geschwindigkeit kann vorgegeben oder adaptiv während des Betriebs bestimmt werden. Für diese Bestimmung können die Geschwindigkeitsdaten von der Steuerung 26 selbst bestimmt oder über den Nachrichtenknoten 28 von der Förderersteuerung 30 übermittelt werden.

Figur 3 ist eine der Figur 2 analoge Darstellung zur Verdeutlichung einer besonderen Situation, in der noch während des Abbremsens erneut beschleunigt wird. Der gestrichelte Ausschnitt der über die Zeit aufgetragenen Aufnahmeperiode zeigt einen Knick an der Stelle, an der das Vorzeichen der Beschleunigung sich umkehrt. Dieser Knick würde zu einer Verzerrung der Bilddaten führen. Da der Zeilensensor 10 über die Förderersteuerung 30 im Voraus über den Knick informiert ist, kann, wie in dem vergrößerten Ausschnitt 34 dargestellt, eine Glättung der Aufnahmeperiode vorgenommen und damit die Verzerrung vermieden werden.

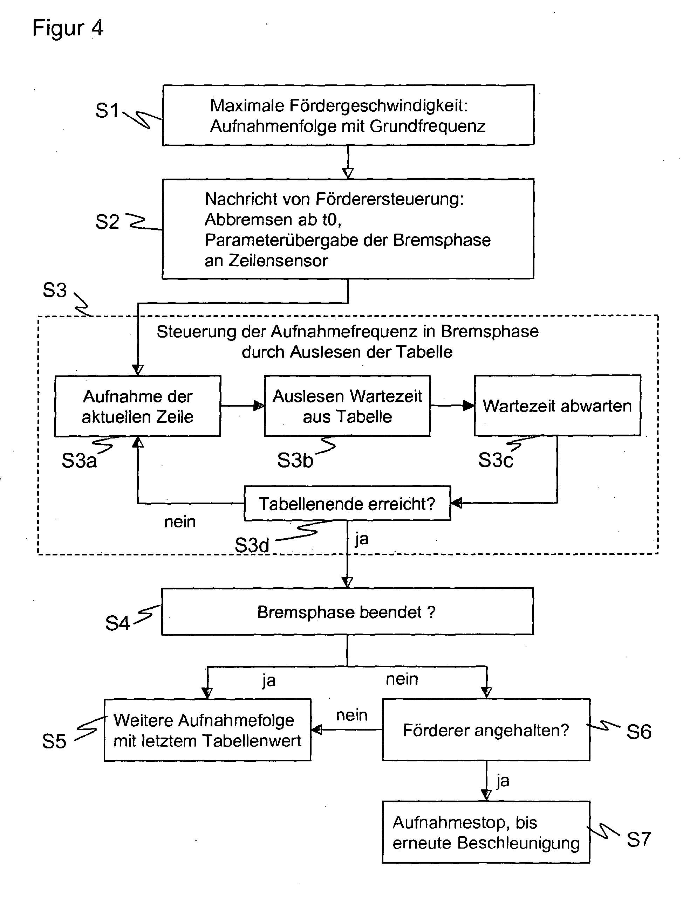

Anhand der Figur 4 wird im Folgenden ein Verfahren zur Anpassung der Aufnahmefrequenz dargestellt, welches auf einer Tabelle beruht, in der Werte für geeignete Aufnahmeperioden bei einem vorgegebenen Geschwindigkeitsprofil abgelegt sind. Für eine konstante Beschleunigung ist die Tabelle eine Wertetabelle für eine Hyperbel, für andere Geschwindigkeitsprofile muss die Tabelle aus der Kehrwertbeziehung zwischen Aufnahmefrequenz und Aufnahmeperiode und der Beziehung zwischen Geschwindigkeit des Förderers 12 und der Aufnahmefrequenz, die bei einer gewünschten gleichmäßigen Auflösung der Bilddaten proportional ist, berechnet werden. Eine derartige Berechnung kann vorab erfolgen und die Tabelle in einem nichtflüchtigen Speicher abgelegt werden, die Steuerung 26 kann aber auch in der Lage sein, die Tabelle aus einem Geschwindigkeitsprofil selbständig zu berechnen. Weitere Konfigurationsverfahren bestehen in einer Eingabe oder einem Einlesen der Wertetabelle über einen Netzwerkanschluss oder eine Bedienerschnittstelle.

Zunächst arbeitet in einem ersten Schritt S1 in einer Phase, in welcher der Förderer 12 sich mit einer maximalen Fördergeschwindigkeit bewegt, der Zeilensensor 10 mit einer Grundaufnahmefrequenz. In einem zweiten Schritt S2 erhält der Zeilensensor 10 eine Nachricht von der Förderersteuerung 30, in welcher ein verändertes Geschwindigkeitsprofil ab einem festgelegten Zeitpunkt t0 angekündigt wird. Im dargestellten Beispiel handelt es sich hierbei um eine Bremsphase, deren Parameter die Förderersteuerung 30 der Steuerung 26 des Zeilensensors 10 übergibt. In einem dritten Schritt S3, die aus einer in Unterschritte S3a-S3d zu unterteilenden Schleife besteht, wird ab dem Zeitpunkt t0 die Tabelle mit den dem Geschwindigkeitsprofil zugehörigen Aufnahmeperioden abgearbeitet, bis die Bremsphase vorbei ist.

Dazu wird jeweils pro Schleifendurchgang eine Zeile aufgenommen (S3a), die nächste Aufnahmeperiode oder Wartezeit aus der Tabelle ausgelesen (S3b), die entsprechende Zeit abgewartet (S3c) und überprüft, ob das Tabellenende erreicht ist (S3d). Ist das Tabellenende noch nicht erreicht, so beginnt die Schleife erneut mit einer Aufnahme der nächsten Zeile (S3a).

Bei Erreichen des Tabellenendes wird die Schleife verlassen und in einem weiteren Schritt S4 überprüft, ob laut den in Schritt S2 übergebenen Parametern auch die Bremsphase beendet ist, beziehungsweise ob die Geschwindigkeit nach aktueller Messung wieder konstant ist. Ist das der Fall, so werden weitere Bilddaten zeilenweise mit einer Aufnahmeperiode generiert, welche dem letzten Tabellenwert und damit einer der erreichten Endgeschwindigkeit angemessenen Aufnahmeperiode entspricht. War dagegen in Schritt S4 die Bremsphase noch nicht beendet, so wird überprüft (S6), ob der Förderer 12 angehalten wurde. Ist das der Fall, so werden weitere Aufnahmen gestoppt, bis in einer erneuten Beschleunigungsphase der Förderer 12 wieder angefahren wird. Andernfalls ist die Bremsphase noch nicht beendet, obwohl keine Werte mehr in der Tabelle vorgesehen sind. Dann wird wie bei Schritt S5 mit dem letzten Tabellenwert für die Aufnahmeperiode fortgefahren, weil dies zwar möglicherweise nicht der ideale, jedenfalls aber der beste zur Verfügung stehende Wert ist.

Der beschriebene Durchlauf durch eine Beschleunigungsphase kann eine Bremsphase, eine echte Beschleunigungsphase mit positiver Beschleunigung oder eine Mischung aus beiden mit einfacher oder mehrfacher Bewegungsumkehr sein. Das Verfahren ist jeweils dasselbe, weil die erforderlichen Aufnahmeperioden in der Tabelle bereitstehen. Dies gilt auch für den Spezialfall einer Beschleunigung aus einem Stillstand des Förderers 12, der aus Sicht des erfindungsgemäßen Verfahrens keine Besonderheit bietet.

Die Implementierung über eine Wertetabelle ist nur eine besonders einfache Umsetzung, die Erfindung ist hierauf nicht beschränkt. So ist zum Beispiel auch denkbar, dass die Geschwindigkeit oder die jeweils zurückgelegten Strecken des Förderers 12 dynamisch von dem Zeilensensor 26 oder einem vorgelagerten Sensor bestimmt wird und daraus online oder mit einem Zeitversatz die nächste Aufnahmeperiode berechnet wird.

In einer besonderen Ausführungsform der Erfindung ist die Steuerung 26 insgesamt oder nur derjenige Teil, welcher das erfindungsgemäße Verfahren insbesondere gemäß Figur 4 einschließlich der Wertetabelle umsetzt, auf einem eigenen Logikbaustein implementiert, beispielsweise einem FPGA. Es genügt dann, diesem Logikbaustein mitzuteilen, welches Geschwindigkeitsprofil vorliegt, und dieser gibt in zeitlicher Abfolge die passenden Aufnahmeperioden zurück. Dazu können speziell in dem FPGA eine ganze Reihe von Tabellen abgelegt sein, welche verschiedenen Geschwindigkeitsprofilen, Bremsphasen oder Beschleunigungsphasen entsprechen. Die Erfindung kann dann ganz leicht in bestehende Systeme integriert werden, indem statt einer konstanten Wartezeit zwischen zwei Aufnahmen das FPGA durch einen einfachen Schaltbefehl zur Ausgabe von angepassten Aufnahmeperioden veranlasst wird, die als Wartezeit verwendet werden.

## Patentansprüche

1. Vorrichtung, insbesondere Codeleser, zum Aufnehmen von Bildern von auf einer Fördereinrichtung (12) bewegten Objekten (14), wobei die Vorrichtung einen Zeilensensor (10), insbesondere eine Zeilenkamera, welche die Objekte zur Erzeugung von Bilddaten der Oberfläche zeilenweise abtasten kann sowie eine Geschwindigkeitsbestimmungseinrichtung (26; 30) aufweist, welche die Bewegungsgeschwindigkeit der Objekte (14) gegenüber dem Zeilensensor (10) oder deren geförderte Strecke bestimmen kann,
wobei eine Auswertungseinheit (26) vorgesehen ist, welche dafür ausgebildet ist, die Aufnahmefrequenz des Zeilensensors (10) an die Bewegungsgeschwindigkeit anzupassen,
**dadurch gekennzeichnet,**
**dass** die Geschwindigkeitsbestimmungseinrichtung (30) eine Förderersteuerung der Fördereinrichtung (12) ist, welche das Geschwindigkeitsprofil der Fördereinrichtung (12) vorgibt, und wobei die Förderersteuerung (30) Daten über das Geschwindigkeitsprofil an die Auswertungseinheit (26) übermitteln kann.

2. Vorrichtung, insbesondere Codeleser, zum Aufnehmen von Bildern von auf einer Fördereinrichtung (12) bewegten Objekten (14), wobei die Vorrichtung einen Zeilensensor (10), insbesondere eine Zeilenkamera, welche die Objekte zur Erzeugung von Bilddaten der Oberfläche zeilenweise abtasten kann sowie eine Geschwindigkeitsbestimmungseinrichtung (26; 30) aufweist, welche die Bewegungsgeschwindigkeit der Objekte (14) gegenüber dem Zeilensensor (10) oder deren geförderte Strecke bestimmen kann, wobei eine Auswertungseinheit (26) vorgesehen ist, welche dafür ausgebildet ist, die Aufnahmefrequenz des Zeilensensors (10) an die Bewegungsgeschwindigkeit anzupassen,
**dadurch gekennzeichnet,**
**dass** die Auswertungseinheit (26) zumindest teilweise auf einem programmierbaren Logikbaustein, insbesondere einem FPGA, des Zeilensensors (10) implementiert ist, und dass der Zeilensensor (10) mindestens einen Eingang aufweist, mit dem der Logikbaustein angewiesen werden kann, die Anpassung der Aufnahmefrequenz über ein vorgegebenes Geschwindigkeitsprofil zu starten und durchzuführen.

3. Vorrichtung nach Anspruch 1 oder 2,
wobei die Auswertungseinheit (26) dafür ausgebildet ist, die Aufnahmefrequenz derart anzupassen, dass der Zeilensensor (10) Bilddaten äquidistanter Zeilen des Objekts (14) aufnimmt.

4. Vorrichtung nach einem der Ansprüche 1 bis 3,
wobei der Zeilensensor (10) dafür ausgebildet ist, auf eine Grundaufnahmefrequenz mit zugehörigen Aufnahmeparametern eingestellt zu werden, die insbesondere einer maximalen Fördergeschwindigkeit der Fördereinrichtung (12) entspricht, und wobei die Auswertungseinheit (26) dafür ausgebildet ist, die Anpassung der Aufnahmefrequenz und/oder der Aufnahmeparameter an eine gegenüber der maximalen Fördergeschwindigkeit veränderte Bewegungsgeschwindigkeit dem Zeilensensor (10) differentiell vorzugeben.

5. Vorrichtung nach einem der Ansprüche 2 bis 4,
wobei die Geschwindigkeitsbestimmungseinrichtung (26; 30) ein Weggeber, ein Inkrementalgeber oder ein anderer dem Zeilensensor (10) vorgelagerter Sensor ist und/oder wobei die Fördereinrichtung (12) ein Schalenförderer oder dessen Einschussband ist.

6. Vorrichtung nach einem der vorhergehenden Ansprüche,
wobei die Daten über das Geschwindigkeitsprofil eine gegenwärtige Geschwindigkeit, eine Dauer einer folgenden Beschleunigungsphase, einen Beginn der Beschleunigungsphase und/oder eine Endgeschwindigkeit nach Abschluss der Beschleunigungsphase enthalten.

7. Vorrichtung nach Anspruch 1,
wobei die Förderersteuerung (30) für die Einstellung einer maximalen Fördergeschwindigkeit von 2 m/s, einer verzögerten Fördergeschwindigkeit von 0,5 m/s sowie einer Beschleunigungsphase von 500 ms bei einer Beschleunigung von 3 m/s² von maximaler Fördergeschwindigkeit zu verzögerter Geschwindigkeit und umgekehrt ausgebildet ist.

8. Vorrichtung nach einem der vorhergehenden Ansprüche,
wobei in der Auswertungseinheit (26) die sich zeitlich ändernde Aufnahmefrequenz für ein vorgegebenes Geschwindigkeitsprofil eines Objekts (14) als zeitliche Intervalle zwischen je zwei Aufnahmen in einer Tabelle abgelegt ist, wobei die Einträge in der Tabelle insbesondere eine Hyperbel beschreiben.

9. Vorrichtung nach Anspruch 8,
wobei die Auswertungseinheit (26) dafür ausgebildet ist, dass Einträge der Tabelle vorgegeben, insbesondere durch Eingeben oder Einlesen, oder anhand eines vorgegebenen Geschwindigkeitsprofils berechnet werden, insbesondere als Hyperbeln aus einer maximalen Fördergeschwindigkeit, einer verzögerten Fördergeschwindigkeit sowie einer gleichmäßigen Beschleunigungsphase dazwischen, die durch Anfangszeit, Endzeit und/oder Beschleunigung angegeben ist.

10. Vorrichtung nach Anspruch 8 oder 9,
wobei die Auswertungseinheit (26) dafür ausgebildet ist, einen Tabellenwert mehrfach zu verwenden, um längere Beschleunigungsphasen abzubilden, und/oder einen Aufnahmestopp des Zeilensensors (10) zu veranlassen, wenn die Bewegungsgeschwindigkeit Null, also die Fördereinrichtung (12) angehalten ist.

11. Vorrichtung nach einem der Ansprüche 8 bis 10,
wobei in der Auswertungseinheit (26) eine weitere Tabelle vorgesehen ist, welche zeitliche Intervalle für die Aufnahmefrequenz für den Fall enthält, dass in einer Beschleunigungsphase das Vorzeichen wechselt, also eine Beschleunigungsumkehr stattfindet, um einen glatten Übergang der zeitlichen Intervalle sicherzustellen.

12. Verfahren zum Aufnehmen von Bildern von auf einer Fördereinrichtung (12) bewegten Objekten (14) und zum Dekodieren von auf den Objekten (14) angeordneten Codes (20), wobei die Objekte (14) zur Erzeugung von Bilddaten zeilenweise abgetastet werden und wobei die Bewegungsgeschwindigkeit der Objekte (14) gegenüber dem Zeilensensor (10) oder deren geförderte Strecke bestimmt wird, wobei die Aufnahmefrequenz der zeilenweisen Abtastung an die Bewegungsgeschwindigkeit angepasst wird,
**dadurch gekennzeichnet,**
**dass** der Fördereinrichtung (12) ein Geschwindigkeitsprofil vorgegeben wird und dass das Geschwindigkeitsprofil für die Anpassung der Aufnahmefrequenz verwendet wird.

13. Verfahren nach Anspruch 12,
wobei die Abtastzeilen äquidistant über das Objekt (14) verteilt liegen und/oder wobei das Geschwindigkeitsprofil eine gegenwärtige Geschwindigkeit, eine Dauer einer folgenden Beschleunigungsphase, einen Beginn der Beschleunigungsphase und/oder eine Endgeschwindigkeit nach Abschluss der Beschleunigungsphase enthält, und wobei insbesondere eine maximale Fördergeschwindigkeit von 2 m/s, eine verzögerte Fördergeschwindigkeit von 0,5 m/s sowie eine Beschleunigungsphase von 500 ms bei einer Beschleunigung von 3 m/s² von maximaler Fördergeschwindigkeit zu verzögerter Geschwindigkeit und umgekehrt vorgesehen ist.

14. Verfahren nach Anspruch 12 oder 13,
wobei die sich zeitlich ändernde Aufnahmefrequenz für ein vorgegebenes Geschwindigkeitsprofil eines Objekts (14) als zeitliche Intervalle zwischen je zwei Aufnahmen in einer Tabelle abgelegt sind, wobei die Einträge in der Tabelle insbesondere eine Hyperbel beschreiben und aus einer maximalen Fördergeschwindigkeit, einer verzögerten Fördergeschwindigkeit sowie einer gleichmäßigen Beschleunigungsphase dazwischen berechnet werden, die durch Anfangszeit, Endzeit und/oder Beschleunigung angegeben ist.

15. Verfahren nach einem der Ansprüche 12 bis 14,
wobei ein Tabellenwert mehrfach verwendet wird, um längere Beschleunigungsphasen abzubilden, und/oder wobei ein Aufnahmestopp veranlasst wird, wenn die Bewegungsgeschwindigkeit Null, also die Fördereinrichtung (12) angehalten ist, und/oder wobei eine weitere Tabelle vorgesehen ist, welche zeitliche Intervalle für die Aufnahmefrequenz für den Fall enthält, dass in einer Beschleunigungsphase das Vorzeichen wechselt, also eine Beschleunigungsumkehr stattfindet, um einen glatten Übergang der zeitlichen Intervalle sicherzustellen.

## Claims

1. An apparatus, in particular a code reader, for the recording of images of objects (14) moved on a conveyor device (12), wherein the apparatus includes a line sensor (10), in particular a line camera, which can scan the objects line-wise for the generation of image data of the surfaces, as well as a speed determination device (26; 30), which can determine the speed of movement of the objects (14) with respect to the line sensor (10) or their conveyed distance, wherein an evaluation unit (26) is provided, which is adapted to match the recording frequency of the line sensor (10) to the speed of movement.
**characterized in that**
the speed determination device (30) is a conveyor controller of the conveyor device (12) which sets the speed profile of the conveyor device (12) and **in that** the conveyor controller (30) can send data on the speed profile to the evaluation unit (26).

2. An apparatus, in particular a code reader, for the recording of images of objects (14) moved on a conveyor device (12), wherein the apparatus includes a line sensor (10), in particular a line camera, which can scan the objects line-wise for the generation of image data of the surfaces, as well as a speed determination device (26; 30), which can determine the speed of movement of the objects (14) with respect to the line sensor (10) or their conveyed distance, wherein an evaluation unit (26) is provided, which is adapted to match the recording frequency of the line sensor (10) to the speed of movement.
**characterized in that**
the evaluation unit (26) is at least partially implemented on a programmable logic component, in particular an FPGA, of the line sensor (10) and **in that** the line sensor (10) includes at least one input, with which the logic component can be instructed to start and execute the adaptation of the recording frequency via a set speed profile

3. An apparatus in accordance with claim 1 or claim 2, wherein the evaluation unit (26) is adapted to match the recording frequency in such a way that the line sensor (10) records image data of equidistant lines of the object (14).

4. An apparatus in accordance with any one of the claims 1 to 3, wherein the line sensor (10) is adapted to be set to a base recording frequency with associated recording parameters which in particular correspond to a maximum conveying speed of the conveyor device (12) and wherein the evaluation unit (26) is adapted to differentially set the adaptation of the recording frequency and/or of the recording parameters for the line sensor (10) to a speed of movement changed with respect to the maximum conveying speed.

5. An apparatus in accordance with any one of the claims 2 to 4, wherein the speed determination device (26; 30) is a displacement sensor, an incremental encoder or a different sensor preceding the line sensor (10); and/or wherein the conveyor device (12) is a tray conveyor or its infeed belt.

6. An apparatus in accordance with any one of the preceding claims, wherein the data on the speed profile include a current speed, a duration of a subsequent acceleration phase, a start of the acceleration phase and/or an end speed after the completion of the acceleration phase.

7. An apparatus in accordance with claim 1, wherein the conveyor controller (30) is adapted for a setting of a maximum conveying speed of 2 m/s, of a lowered conveying speed of 0.5 m/s as well as of an acceleration phase of 500 ms at an acceleration of 3 m/s² from the maximum conveying speed to a lowered speed and vice versa.

8. An apparatus in accordance with any one of the preceding claims, wherein the recording frequency changing over time for a set speed profile of an object (14) is stored in a table in the evaluation unit (26) as time intervals between two respective recordings, wherein the entries in the table in particular describe a hyperbola.

9. An apparatus in accordance with claim 8, wherein the evaluation unit (26) is adapted so that entries of the table are set, in particular by inputting or reading in, or are calculated on the basis of a set speed profile, in particular as hyperbolas of a maximum conveying speed, a lowered conveying speed as well as a uniform acceleration phase therebetween, which is specified by a start time, a finish time and/or an acceleration.

10. An apparatus in accordance with claim 8 or claim 9, wherein the evaluation unit (26) is adapted to use a table value a plurality of times, to reflect longer acceleration phases and/or to initiate a recording stop of the line sensor (10), if the speed of movement is zero, i.e. the conveyor device is stopped.

11. An apparatus in accordance with any one of the claims 8 to 10, wherein a further table is provided in the evaluation unit (26), which includes time intervals for the recording frequency for the case that the sign changes in an acceleration phase, i.e. a reversal of the acceleration occurs, to ensure a smooth transition of the time intervals.

12. A method for the recording of images of objects (14) moved on a conveyor device (12) and for the decoding of codes (20) arranged on the objects (14), wherein the objects (14) are scanned line wise for the generation of image data and wherein the speed of movement of the objects (14) with respect to the line sensor (10) or their conveyed distance is determined, wherein the recording frequency of the line-wise scanning is matched to the speed of movement
**characterized in that**
a speed profile is preset for the conveyor device (12); and **in that** the speed profile is used for the adaptation of the recording frequency.

13. A method in accordance with claim 12, wherein the scanning lines lie distributed equidistantly over the object (14) and/or wherein the speed profile includes a current speed, a duration of a subsequent acceleration phase, a start of the acceleration phase and/or an end speed after the completion of the acceleration phase and wherein in particular a maximum conveying speed of 2 m/s, a lowered conveying speed of 0.5 m/ s as well as an acceleration phase of 500 ms at an acceleration of 3 m/s² from the maximum conveying speed to a lowered speed and vice versa is provided.

14. A method in accordance with claim 12 or 13, wherein the recording frequency changing over time for a set speed profile of an object (14) is stored in a table as time intervals between two respective recordings, wherein the entries in the table in particular describe a hyperbola and are calculated from a maximum conveying speed, from a lowered conveying speed as well as from a uniform acceleration phase therebetween, which is specified by a start time, a finish time and/or an acceleration.

15. A method in accordance with any one of the claims 12 to 14, wherein a table value is used a plurality of times to reproduce longer acceleration phases and/or wherein a recording stop is initiated when the speed of movement is zero, i.e. the conveyor device (12) is stopped, and/or wherein a further table is provided which includes time intervals for the recording frequency for the case that the sign changes in the acceleration phase, i.e. a reversal of the acceleration occurs, to ensure a smooth transition of the time intervals.

## Revendications

1. Appareil, en particulier lecteur de codes, pour prendre des images d'objets (14) déplacés sur un dispositif de convoyage (12), l'appareil comprenant un capteur en ligne (10), en particulier une caméra en ligne, qui peut palper les objets ligne par ligne pour engendrer des données-images de la surface, ainsi qu'un moyen de détermination de vitesse (26 ; 30) qui est capable de déterminer la vitesse de déplacement des objets (14) par rapport au capteur en ligne (10) ou leur distance de convoyage,
dans lequel est prévue une unité d'évaluation (26) qui est réalisée pour adapter la fréquence de prises de vues du capteur en ligne (10) à la vitesse de déplacement,
**caractérisé en ce que**
le moyen de détermination de vitesse (30) est une commande de convoyage du dispositif de convoyage (12), qui impose le profil de vitesse du dispositif de convoyage (12), et dans lequel la commande de convoyage (30) est capable de transmettre à l'unité d'évaluation (26) des données sur le profil de vitesse.

2. Appareil, en particulier lecteur de codes, pour prendre des images d'objets (14) déplacés sur un dispositif de convoyage (12), l'appareil comprenant un capteur en ligne (10), en particulier une caméra en ligne, qui peut palper les objets ligne par ligne pour engendrer des données-images de la surface, ainsi qu'un moyen de détermination de vitesse (26 ; 30), qui est capable de déterminer la vitesse de déplacement des objets (14) par rapport au capteur en ligne (10) ou leur distance de convoyage, dans lequel est prévue une unité d'évaluation (26) qui est réalisée pour adapter la fréquence de prises de vues du capteur en ligne (10) à la vitesse de déplacement,
**caractérisé en ce que**
l'unité d'évaluation (26) est mise en oeuvre au moins partiellement sur un composant logique programmable, en particulier un FPGA, du capteur en ligne (10), et **en ce que** le capteur en ligne (10) comprend au moins une entrée au moyen de laquelle il est possible de donner instruction au composant logique de démarrer et d'exécuter l'adaptation de la fréquence de prises de vues sur un profil de vitesse prédéterminé.

3. Appareil selon la revendication 1 ou 2,
dans lequel l'unité d'évaluation (26) est réalisée pour adapter la fréquence de prises de vues de telle manière que le capteur en ligne (10) prend des données-images de lignes équidistantes de l'objet (14).

4. Appareil selon l'une des revendications 1 à 3,
dans lequel le capteur en ligne (10) est réalisé pour être réglé à une fréquence de prises de vues de base avec des paramètres de prises de vues associés, qui correspond en particulier à une vitesse de convoyage maximum du dispositif de convoyage (12), et dans lequel l'unité d'évaluation (26) est réalisée pour imposer au détecteur en ligne (10) de manière différentielle l'adaptation de la fréquence de prises de vues et/ou des paramètres de prises de vues à une vitesse de déplacement modifiée par rapport à la vitesse de convoyage maximum.

5. Appareil selon l'une des revendications 2 à 4,
dans lequel le moyen de détermination de vitesse (26 ; 30) est un capteur de course, un capteur incrémental ou un autre capteur placé en avant du capteur en ligne (10) et/ou le dispositif de convoyage (12) est un convoyeur à coque ou sa bande d'entrée.

6. Appareil selon l'une des revendications précédentes,
dans lequel les données concernant le profil de vitesse contiennent une vitesse actuelle, une durée d'une phase d'accélération successive, un début de la phase d'accélération et/ou une vitesse finale après terminaison de la phase d'accélération.

7. Appareil selon la revendication 1,
dans lequel la commande de convoyage (30) est réalisée pour établir une vitesse de convoyage maximum de 2m/s, une vitesse de convoyage ralentie de 0,5 m/s, ainsi qu'une phase d'accélération de 500 ms pour une accélération de 3 m/s² de la vitesse de convoyage maximum à la vitesse réduite et inversement.

8. Appareil selon l'une des revendications précédentes,
dans lequel la fréquence de prises de vues qui varie dans le temps pour un profil de vitesse prédéterminé d'un objet (14) est mémorisée dans un tableau dans l'unité d'évaluation (26) sous forme d'intervalle temporel entre deux prises de vues, et les entrées dans le tableau décrivent en particulier une hyperbole.

9. Appareil selon la revendication 8,
dans lequel l'unité d'évaluation (26) est réalisée pour que les entrées du tableau soient prédéterminées, en particulier par saisie ou par lecture, ou soient calculées au moyen d'un profil de vitesse prédéterminé, en particulier sous forme d'hyperbole à partir d'une vitesse de convoyage maximum, d'une vitesse de convoyage réduite, ainsi que d'une phase d'accélération régulière entre ces vitesses, qui est imposée par le temps de départ, le temps final et/ou l'accélération.

10. Appareil selon la revendication 8 ou 9,
dans lequel l'unité d'évaluation (26) est réalisée pour utiliser une valeur du tableau plusieurs fois pour former des images de phases d'accélération prolongées et/ou pour provoquer un arrêt de prises de vues du capteur en ligne (10) si la vitesse de déplacement est égale à zéro, donc si le moyen de convoyage (12) est arrêté.

11. Appareil selon l'une des revendications 8 à 10,
dans lequel un autre tableau est prévu dans l'unité d'évaluation (26), qui contient des intervalles temporels pour la fréquence de prises de vues dans le cas où, dans une phase d'accélération le signe change, donc s'il se produit une inversion d'accélération, pour garantir une transition en douceur des intervalles temporels.

12. Procédé pour prendre des images d'objets (14) déplacés sur un dispositif de convoyage (12) et pour décoder des codes (20) agencés sur des objets (14), dans lequel les objets (14) sont palpés ligne par ligne pour générer des données-images, et dans lequel on détermine la vitesse de déplacement des objets (14) par rapport au capteur en ligne (10), ou leur distance de convoyage, et dans lequel la fréquence de prises de vues du palpage ligne par ligne est adaptée à la vitesse de déplacement,
**caractérisé en ce que**
on impose au dispositif de convoyage (12) un profil de vitesse, et **en ce que** le profil de vitesse est utilisé pour l'adaptation de la fréquence de prises de vues.

13. Procédé selon la revendication 12,
dans lequel les lignes de palpage sont réparties de façon équidistante sur l'objet (14), et/ou dans lequel le profil de vitesse contient une vitesse actuelle, une durée d'une phase d'accélération successive, un commencement de la phase d'accélération et/ou une vitesse finale après terminaison de la phase d'accélération, et dans lequel on prévoit en particulier une vitesse de convoyage maximum de 2 m/s, une vitesse de convoyage réduite de 0,5 m/s, ainsi qu'une phase d'accélération de 500 ms pour une accélération de 3 m/s² de la vitesse de convoyage maximum à la vitesse réduite et inversement.

14. Procédé selon la revendication 12 ou 13,
dans lequel la fréquence de prises de vues qui varie dans le temps pour un profil de vitesse prédéterminé d'un objet (14) est mémorisée dans un tableau sous forme d'intervalle temporel entre deux prises de vue, les entrées dans le tableau décrivent en particulier une hyperbole, et sont calculées à partir d'une vitesse de convoyage maximum, d'une vitesse de convoyage réduite, ainsi que d'une phase d'accélération régulière entre ces deux vitesses, laquelle est indiquée par le temps de départ, le temps final et/ou l'accélération.

15. Procédé selon l'une des revendications 12 à 14,
dans lequel une valeur du tableau est utilisée plusieurs fois pour former des images de phases d'accélération prolongées, et/ou dans lequel on provoque un arrêt des prises de vues quand la vitesse de déplacement est nulle, donc si le dispositif de convoyage (12) et arrêté, et/ou dans lequel on prévoit un autre tableau qui contient des intervalles temporels pour la fréquence de prises de vues dans le cas où, dans une phase d'accélération, le signe change, donc s'il se produit une inversion d'accélération, pour garantir une transition en douceur des intervalles temporels.
